# EUROPEAN PATENT APPLICATION

(11) **EP 3 410 408 A1**
(43) Date of publication of application: **05.12.2018**
(21) Application number: 16887793.4
(22) Date of filing: 30.12.2016
(51) Int. Cl.: G07C 9/00

(54) **NETWORK-BASED CONTROL METHOD, APPARATUS, SERVER AND PMS FOR USE OF DOOR LOCK**

(30) Priority: 29.01.2016 CN 201610066103
(71) Applicant: Beijing Sankuai Online Technology Co., Ltd, Beijing 100080 (CN)
(72) Inventor: WANG, Husheng, Beijing 100080 (CN); SUN, Kai, Beijing 100080 (CN)
(74) Representative: Neusser, Sebastian
(86) International application number: PCT/CN2016/113556
(87) International publication number: WO 2017/128922

(57) **Abstract**

The present disclosure provides a network-based control method, apparatus, server and PMS for a door lock. The method comprises: receiving reservation request information, generating order information (101) according to the reservation request information; generating a room unlock password (102) corresponding to the order information; storing a correspondence (103) between the room identifier corresponding to the order information and the room unlock password; and sending the room unlock password to a room lock (104) corresponding to the room identifier. By generating a room unlock password according to a user's room reservation order information, and storing the correspondence between the room identifier and the room unlock password, the method achieves network-based control for a door lock; and by simply informing the user of the room unlock password, the user can use the password to access the corresponding room.

## Description

### CROSS REFERENCE TO RELATED APPLICATIONS

This patent application claims the priority of a Chinese patent application No. 201610066103.7, filed on January 29, 2016, titled as "Network-Based Control Method, Apparatus, Server and PMS for Door Lock", which is incorporated herein by reference in its entirety.

### TECHNICAL FIELD

The present disclosure relates to the field of internet communication technology and door lock technology.

### BACKGROUND

A hotel has many rooms, and each of rooms has a door lock accordingly. In order to facilitate a user and improve room safety, the door locks of the rooms can be controlled.

For control of a door lock of a room, a magnetic card can be used by a hotel. An individual room is equipped with at least one magnetic card, which stores identifier information corresponding to the room. The magnetic card can be placed on a magnetic card sensing area of the door lock, and the identifier information in the magnetic card can be sent to the door lock through NFC (Near Field Communication), and the door lock can verify the identifier information. If the verification is successful, the door lock opens.

### SUMMARY

The present disclosure discloses a network-based control method, apparatus and server for a door lock, which improves efficiency and safety of door lock control.

In a first aspect, the present disclosure provides a network-based control method for a door lock, comprising:
receiving reservation request information and generating corresponding order information according to the reservation request information;
generating a room unlock password corresponding to the order information;
storing a correspondence between a room identifier corresponding to the order information and the room unlock password; and
sending the room unlock password to a door lock corresponding to the room identifier.

With reference to the first aspect, in an example of the present disclosure, a first possible implementation of the foregoing first aspect is provided, where generating the room unlock password corresponding to the order information comprises:
generating the room unlock password corresponding to the order information according to a preset password generation rule and a preset password level; or
generating the room unlock password corresponding to the order information according to the preset password generation rule, the preset password level, and the order information.

With reference to the first possible implementation of the first aspect, in an example of the present disclosure, a second possible implementation of the foregoing first aspect is provided, where the preset password level comprises a user level, a cleaning level, and a management level, and the order information comprises user information, hotel information and room information;
generating the room unlock password corresponding to the order information according to the preset password generation rule, the preset password level, and the order information comprises:
generating a room unlock password corresponding to a user according to the preset password generation rule, the user level included in the preset password level, and the user information and the room information included in the order information;
generating a room unlock password corresponding to a cleaning personnel according to the preset password generation rule, the cleaning level included in the preset password level, and the room information included in the order information; and
generating a room unlock password corresponding to a hotel manager according to the preset password generation rule, the management level included in the preset password level, and the hotel information and the room information included in the order information.

With reference to the first aspect, in an example of the present disclosure, a third possible implementation of the foregoing first aspect is provided, where the method further comprises:
generating a valid period for the room unlock password according to the reservation request information; and
sending the valid period to the door lock corresponding to the room identifier, so that the door lock stores the valid period for the room unlock password.

With reference to the first aspect, in an example of the present disclosure, a fourth possible implementation of the foregoing first aspect is provided, where the method further comprises:
after the room unlock password corresponding to the order information is generated,
sending the room unlock password to a user terminal, so that the user terminal stores the room unlock password; or
when an user arrives at a hotel to check in, retrieving the room unlock password from the stored correspondence between the room identifier and the room unlock password according to the room identifier corresponding to the order information, and displaying the room unlock password.

With reference to the first aspect, in an example of the present disclosure, a fifth possible implementation of the foregoing first aspect is provided, where the method further comprises:
receiving unlock information sent by the user terminal, the unlock information comprising a room unlock password and room information; and
sending the room unlock password to the door lock corresponding to the room information, so that the door lock verifies the room unlock password.

In a second aspect, the present disclosure provides a network-based control apparatus for a door lock, the apparatus comprising:
a receiving module, configured to receive reservation request information, and to generate corresponding order information according to the reservation request information;
a generating module, configured to generate a room unlock password corresponding to the order information;
a storage module, configured to store a correspondence between a room identifier corresponding to the order information and the room unlock password; and
a sending module, configured to send the room unlock password to a door lock corresponding to the room identifier.

With reference to the second aspect, in an example of the present disclosure, a first possible implementation of the foregoing second aspect is provided, where the generating module comprises:
a first generating unit, configured to generate the room unlock password corresponding to the order information according to a preset password generation rule and a preset password level; or
a second generating unit, configured to generate the room unlock password corresponding to the order information according to the preset password generation rule, the preset password level, and the order information.

With reference to the first possible implementation of the second aspect, in an example of the present disclosure, a second possible implementation of the foregoing second aspect is provided, where the preset password level comprises a user level, a cleaning level, and a management level, and the order information comprises user information, hotel information and room information; the second generating unit comprises:
a first generating subunit, configured to generate a room unlock password corresponding to an user according to the preset password generation rule, the user level included in the preset password level, and the user information and the room information included in the order information;
a second generating subunit, configured to generate a room unlock password corresponding to a cleaning personnel according to the preset password generation rule, the cleaning level included in the preset password level, and the room information included in the order information;
a third generating subunit, configured to generate a room unlock password corresponding to a hotel manager according to the preset password generation rule, the management-level included in the preset password level, and the hotel information and room information included in the order information.

With reference to the second aspect, in an example of the present disclosure, a third possible implementation of the foregoing second aspect is provided, where the apparatus further comprises:
a valid period generating module, configured to generate a valid period for the room unlock password according to the reservation request information; and to send the valid period to the door lock corresponding to the room identifier, so that the door lock stores the valid period for the room unlock password.

With reference to the second aspect, in an example of the present disclosure, a fourth possible implementation of the above second aspect is provided, where
the sending module is further configured to send the room unlock password to a user terminal, so that the user terminal stores the room unlock password; or
the apparatus further comprises:
a retrieving module, configured to, when an user arrives at a hotel to check in, retrieve the room unlock password from the stored correspondence between the room identifier and the room unlock password according to the room identifier corresponding to the order information, and to display the room unlock password.

With reference to the second aspect, in an example of the present disclosure, a fifth possible implementation of the above second aspect is provided, where
the receiving module is further configured to receive unlock information sent by a user terminal, the unlock information comprising a room unlock password and room information; and
the sending module is further configured to send the room unlock password to the door lock corresponding to the room information, so that the door lock verifies the room unlock password.

In the third aspect, the present disclosure provide a server which comprises:
a receiving module, configured to receive reservation request information, and to generate corresponding order information according to the reservation request information;
a generating module, configured to generate a room unlock password corresponding to the order information;
a sending module, configured to send the order information and the room unlock password to a hotel management system (PMS) corresponding to the reservation request information, so that the PMS controls a door lock corresponding to the order information according to the room unlock password.

With reference to the third aspect, in an example of the present disclosure, a first possible implementation of the foregoing third aspect is provided, wherein the generating module comprises:
a first generating unit, configured to generate the room unlock password corresponding to the order information according to a preset password generation rule and thea preset password level; or
a second generating unit, configured to generate the room unlock password corresponding to the order information according to the preset password generation rule, the preset password level, and the order information.

With reference to the first possible implementation of the third aspect, in an example of the present disclosure, a second possible implementation of the foregoing third aspect is provided, where the preset password level comprises a user level, a cleaning level, and a management level, and the order information comprises user information, hotel information, and room information; and
the second generating unit comprises:
a first generating subunit, configured to generate a room unlock password corresponding to an user according to the preset password generation rule, the user level included in the preset password level, and the user information and the room information included in the order information;
a second generating subunit, configured to generate a room unlock password corresponding to a cleaning personnel according to the preset password generation rule, the cleaning level included in the preset password level, and the room information included in the order information;
a third generating subunit, configured to generate a room unlock password corresponding to a hotel manager according to the preset password generation rule, the management level included in the preset password level, and the hotel information and the room information included in the order information.

With reference to the third aspect, in an example of the present disclosure, a third possible implementation of the foregoing third aspect is provided, wherein the server further comprises:
a valid period generating module, configured to generate a valid period for the room unlock password according to the reservation request information;
wherein the sending module is further configured to send the valid period to the PMS, so that the PMS sends the valid period to the door lock corresponding to the order information.

With reference to the third aspect, in an example of the present disclosure, a fourth possible implementation of the above third aspect is provided, wherein
the sending module is further configured to send the room unlock password to a user terminal, so that the user terminal stores the room unlock password.

With reference to the third aspect, in an example of the present disclosure, a fifth possible implementation of the foregoing third aspect is provided, wherein the server further comprises:
a receiving module, configured to receive unlock information sent by a user terminal, the unlock information comprising a room unlock password and room information;
wherein the sending module is further configured to send the unlock information to the PMS, so that the PMS controls the door lock corresponding to the room information to verify the room unlock password.

In a fourth aspect, the present disclosure provides a hotel management system PMS comprising:
a receiving module, configured to receive order information and room unlock password sent by a server;
a storage module, configured to store a correspondence between a room identifier corresponding to the order information and the room unlock password; and
a sending module, configured to send the room unlock password to a door lock corresponding to the room identifier.

With reference to the fourth aspect, in an example of the present disclosure, a first possible implementation of the foregoing fourth aspect is provided, where the receiving module is further configured to receive unlock information sent by a server, the unlock information comprising the room unlock password and the room information; and
the sending module is further configured to send the room unlock password to a door lock corresponding to the room information, so that the door lock verifies the room unlock password.

With reference to the fourth aspect, in an example of the present disclosure, a second possible implementation of the foregoing fourth aspect is provided, where the PMS further comprises:
a retrieving module, configured to, when an user arrives at a hotel to check in, retrieve a room unlock password from the stored correspondence between the room identifier and the room unlock password according to the room identifier corresponding to the order information, and to display the room unlock password.

With reference to the fourth aspect, in an example of the present disclosure, a third possible implementation of the foregoing fourth aspect is provided, where
the receiving module is further configured to receive a valid period for the room unlock password sent by the server; and
the sending module is further configured to send the valid period to a door lock corresponding to the room identifier so that the door lock stores the valid period.

In the method, the apparatus, the server and the PMS provided in the present disclosure, reservation request information is received, and corresponding order information is generated according to the reservation request information; a room unlock password corresponding to the order information is generated; a correspondence between a room identifier corresponding to the order information and the room unlock password is stored; and the room unlock password is sent to the door lock corresponding to the room identifier. In the present disclosure, the network-based control for the door lock is realized by generating a room unlock password according to a user's reservation order information, and storing a correspondence between the room identifier and the room unlock password, so that the user who is only notified of the room unlock password can unlock the door with the room unlock password, thereby reducing manual intervention during the door lock control process and improving the efficiency of the door lock control. In addition, the room unlock password does not require a physical carrier, which reduces the possibility of losing the room unlock password and improves the security of the door lock control.

In order that the above objects, features, and advantages of the present disclosure may be more clearly and easily understood, the following examples are provided and described in detail with the drawings.

### BRIEF DESCRIPTION OF THE DRAWINGS

In order to more clearly illustrate the technical solutions of the examples of the present disclosure, the drawings used in the examples will be briefly described below. It should be understood that the following drawings only show some examples of the disclosure and are not intended to limit the scope of the present invention. For those skilled in the art, other relevant drawings may also be obtained on the basis of these drawings without any creative work.
FIG. 1A shows a network architecture diagram of a door lock control provided in Example 1 of the present disclosure.
FIG. 1B is a flowchart of a network-based control method for a door lock provided in Example 1 of the present disclosure.
FIG. 2A shows a network architecture diagram of a door lock control provided in Example 2 of the present disclosure.
FIG. 2B shows a signaling interaction diagram of a door lock network control provided in Example 2 of the present disclosure.
FIG. 3A is a schematic diagram of a hardware structure of a network-based control apparatus for a door lock provided in Example 3 of the present disclosure.
FIG. 3B is a schematic diagram of a logical structure of a network-based control apparatus for a door lock provided in Example 3 of the present disclosure.
FIG. 4A shows a schematic hardware structure diagram of a server provided in Example 4 of the present disclosure.
FIG. 4B is a schematic diagram of a logical structure of a server provided in Example 4 of the present disclosure.
FIG. 5 is a schematic structural diagram of a hotel management system PMS provided in Example 5 of the present disclosure.
FIG. 6 shows a schematic structural diagram of another hotel management system PMS provided in Example 6 of the present disclosure.

### DETAILED DESCRIPTION OF THE EMBODIMENTS

The technical solutions in the examples of the present disclosure will be clearly described with reference to the drawings in the examples of the present disclosure, and it is obvious that the described examples are merely a part of the examples of the present disclosure and not all examples. The components of the disclosed examples, which are generally described and illustrated in the figures herein, may be arranged and designed in a wide variety of different configurations. Thus, the following detailed description of examples of the present disclosure provided in the drawings is not intended to limit the scope of the present disclosure, but is merely representative of selected examples of the present disclosure. Based on the examples of the present disclosure, all other examples obtained by those skilled in the art without making creative efforts shall fall within the protection scope of the present disclosure.

Considering that every room is equipped with at least one magnetic card, management and allocation for magnetic cards of all rooms may involve excessive manual intervention, and the management and control for the door locks are inefficient. Moreover, a room can be opened only if a magnetic card corresponding to the room is available. If the magnetic card is accidentally lost, it may bring security risks. Thus, controlling the room door lock with the magnetic card has a very low security. Based on this, the present disclosure provides a network-based control method and apparatus for a door lock which are described by the following examples.

### Example 1

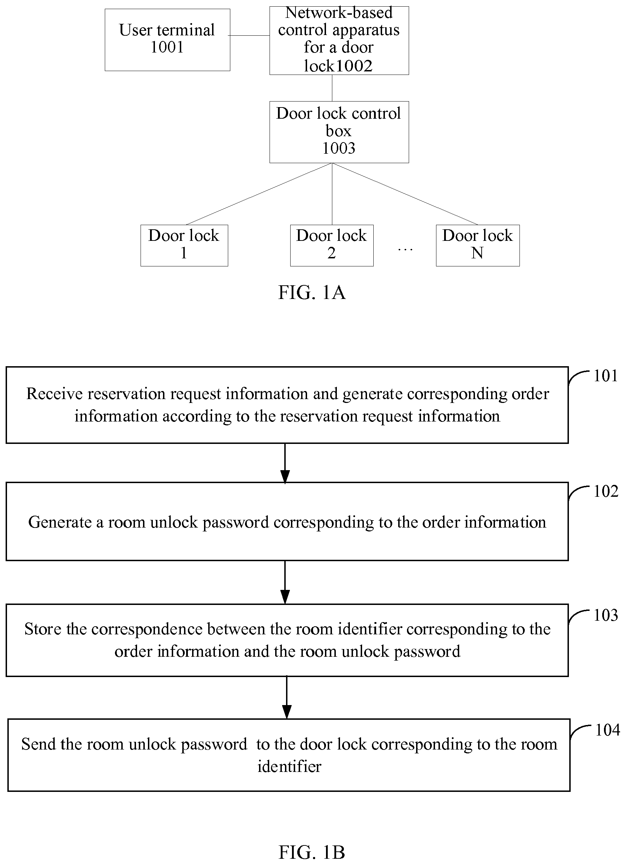

In an example of the present disclosure, a network-based control method of a door lock is provided. The method is applicable to a network-based control apparatus for a door lock. The network-based control apparatus for the door lock may be a hotel's PMS (Property Management System). The network architecture applicable to the method is shown in FIG. 1A. The network architecture may comprise a user's terminal 1001, a network-based control apparatus for a door lock 1002, a door lock control box 1003, and a door lock. The user terminal may be a user's mobile phone, a PC (Personal Computer) or a PAD (Portable Android Apparatus, tablet PC), etc., and the door lock control box is a relay network element configured to communicate the network-based control apparatus for the door lock and the door lock. One door lock control box can communicate with one or more of the door locks. FIG. 1A schematically depicts a door lock control box and a plurality of door locks (door lock 1, door lock 2,..., door lock N) corresponding to the door lock control box. When the user orders a room through the user terminal in the network-based control apparatus for the door lock, the method provided in examples of the present disclosure can realize network-based control for the room door lock, thereby improving the efficiency and safety for controlling the room door lock.

Referring to FIG. 1B, the method specifically comprises the following blocks:

Block 101: reservation request information may be received and corresponding order information may be generated according to the reservation request information.

The reservation request information may comprise user's personal information, hotel information, and user's reservation requirement information. The user's personal information may comprise the user's name, contact information, ID number, and the like. The hotel information comprises a name of hotel which the user wants to reserve. The user's reservation requirement information comprises information such as a type of room which the user needs to reserve and length of stay. The type of room comprises a single room, a deluxe suite or a standard room, and so on. The length of stay can comprise a user's check-in time and check-out time.

The user can log in the network-based control apparatus for the door lock and send the reservation request information to the network-based control apparatus for the door lock through the user terminal. When the network-based control apparatus for the door lock receives the reservation request information sent by the user terminal, it may generate the order information for the user according to the reservation request information.

In addition, the reservation request information may also be manually input into the network-based control apparatus for the door lock. The network-based control apparatus for the door lock then generates the order information for the user according to the reservation request information.

When the network-based control apparatus for the door lock generates the order information for the user, it may allocate a room meeting the user's reservation requirements to the user according to the reservation requirement information included in the reservation request information, and record a room identifier corresponding to the allocated room. The room identifier may be the room number.

The generated order information comprises order number, user information, hotel information, and room information. The user information may be personal information of the user included in the reservation request information, the hotel information may be a name and address of the hotel that the user want to reserve, and the room information comprises a room identifier corresponding to the room allocated to the user and a length of stay.

After the network-based control apparatus for the door lock generates the order information corresponding to the reservation request information, it also stores the order information.

Block 102: a room unlock password corresponding to the order information may be generated.

In the present disclosure, the network-based control apparatus for the door lock is provided with a password generation rule in advance. The password generation rule may specify the number of digits of a room unlock password to be generated and password generation algorithm to be used.

In addition, in daily management of the hotel, daily maintenance personnel such as cleaning personnel need to open the room when cleaning the room and performing room safety management. Hotel management personnel such as a hotel manager sometimes need to open the room during the hotel management process. Therefore, it is required to generate a room unlock password not only for a user, but also for daily maintenance personnel such a cleaning personnel, and hotel management personnel such as a hotel manager. In the present disclosure, the network-based control apparatus for the door lock may be provided with a preset password level in advance. The password level comprises a user level, a cleaning level, and a management level. The user can use a user-level room unlock password to open the room, and the daily maintenance personnel of the hotel such as a cleaning personnel can use a cleaning-level room unlock password to open the room. The hotel management personnel such as a hotel manager can use a management-level room unlock password to open the room.

When a room unlock password is generated, according to the preset password generation rule and the preset password level, the room unlock password corresponding to the order information may be generated. A random password generation algorithm may be used when generating the room unlock password.

In addition to the above-described method for generating a room unlock password, a room unlock password may also be generated based on the content included in the generated order information. Specifically, the room unlock password corresponding to the order information may be generated according to the preset password generation rule, the preset password level, and the order information.

When the preset password level is the user-level, a room unlock password corresponding to the user may be generated according to the preset password generation rule, the user level included in the preset password level, and the user information and the room information included in the order information.

When the preset password level is the cleaning level, a room unlock password corresponding to the cleaning personnel may be generated according to the preset password generation rule, the cleaning level included in the preset password level, and the room information included in the order information.

When the preset password level is the management level, a room unlock password corresponding to the hotel manager may be generated according to the preset password generation rule, the management level included in the preset password level, and the hotel information and the room information included in the order information.

After the user-level room unlock password is generated, the order information and the user-level room unlock password may be also sent to a user terminal so that the user terminal may store the room unlock password. Similarly, the management-level room unlock password corresponding to the order information may be sent to a terminal of hotel management personnel such as a hotel manager, and the cleaning-level room unlock password may be sent to a terminal of daily maintenance personnel such as the cleaning personnel.

In the present disclosure, when the room unlock password corresponding to the order information is generated, a valid period for the room unlock password may be also generated according to the reservation request information, and the correspondence between the room unlock password and the valid period may be stored. The length of stay included in the reservation request information may be determined as the valid period for the room unlock password, that is, the valid period may be from a user's check-in time to check-out time.

Block 103: the correspondence between the room identifier corresponding to the order information and the room unlock password may be stored.

After the room unlock password is generated, the correspondence between the room identifier corresponding to the room allocated to the user and each of the levels of the room unlock password may be stored. When the user arrives at the hotel to check in subsequently, the user can present the ID card or the order information to the hotel service personnel. The hotel service personnel can obtain the room identifier corresponding to the room which the user has reserved from the stored order information according to the ID card or the order information presented by the user. Then, the hotel service personnel can, according to the room identifier, retrieve the corresponding user-level room unlock password from the stored correspondence between the room identifier and the room unlock password, and inform the user of the room unlock password.

In addition, in the example of the present disclosure, after the order information corresponding to the reservation request information and the user-level room unlock password are generated in block 102, the user-level room unlock password is sent to the user terminal through the network.

Block 104: the room unlock password may be sent to the door lock corresponding to the room identifier.

In the disclosed example, the door lock control box may be in network communication with one or more door locks. The door lock control box stores room identifiers corresponding to the door locks with which the door lock control box can perform network communication. For each door lock control box, the network-based control apparatus for the door lock also stores identifier of the door lock control box and the room identifiers corresponding to the door locks with which the door lock control box can perform network communication.

After storing the correspondence between the room identifier and the room unlock password, the network-based control apparatus for the door lock may determine the door lock control box with which the door lock corresponding to the room identifier performs network communication according to the room identifier, and send the room identifier, the room unlock password corresponding to the room identifier, and the password level and the valid period of the room unlock password to the determined door lock control box. After receiving the room identifier, and the corresponding room unlock password, the password level and the valid period, the door lock control box may send the room unlock password, the password level and the valid period to the door lock corresponding to the room identifier. After receiving the room unlock password, the password level and the valid period sent by the door lock control box, the door lock may store the room unlock password, the password level and the valid period.

Through the above blocks 101-104, the user's order information can be associated with the door lock control of the room, and the room unlock passwords at each of the levels corresponding to the order information can be generated, and subsequently, the user, the hotel daily maintenance personnel, and the hotel manager can open the room with the room unlock password at the corresponding level.

In the example of the present disclosure, the manner for opening the room based on the room unlock password is related to the manner in which the user knows the user-level room unlock password. The manner in which the hotel's daily maintenance personnel open the room based on the cleaning-level room unlock password and the manner in which the hotel manager opens the room based on the management-level room opening password are similar to the manner in which the user opens the room. The present disclosure is described in detail by taking that the user opens the room based on the user-level unlock password as an example.

When the user is informed of the user-level room unlock password by the hotel service personnel at the time of check-in, the unlock process for the user is as follows: the user arrives at his/her room, the door lock of which is equipped with a password input panel, and inputs the user-level room unlock password on the password input panel, and the door lock acquires the user-entered room unlock password from the password input panel, and verifies whether the stored user-level room unlock password is the same with the room unlock password input by the user. If they are the same, the door lock verifies whether the current time is within the valid period of the room unlock password. If the current time is within the valid period of the room unlock password, the door lock will be automatically opened to allow the user to enter the room. If not, the door lock will not be opened and the door lock reminds the user via voice that the room is not available for the user at present. If the stored user-level room unlock password is different from the room unlock password input by the user, the verification fails and the door lock is not opened and the door lock reminds the user that the password is wrong. The user can try inputting the room unlock password again or ask the hotel service personnel about the correct room unlock password.

In the disclosed example, an APP (Application) for the door lock control is installed in the user's terminal. The APP provides the user with an unlocking trigger button, and the user can remotely open the lock through the unlocking trigger button.

When the user receives the user-level room unlock password sent from the network-based control apparatus through the user terminal at the time of reserving a room on the Internet, the user can remotely open the lock through the user terminal. The specific process of remote unlocking comprises the following.

The user may select the room information corresponding to the room to be unlocked on the unlocking interface displayed by the APP, where the room information comprises the room identifier corresponding to the room, and then clicks the unlocking trigger button. When detecting that the user clicks the unlocking trigger button, the user terminal acquires the room information selected by the user and the room unlock password corresponding to the room information, and combines the room information and the room unlock password into unlock information, and sends the unlock information to the network-based control apparatus for the door lock. The network-based control apparatus for the door lock can receive the unlock information from the user terminal and forwards the room unlock password to the door lock corresponding to the room information through the corresponding door lock control box, based on the room information. After receiving the room unlock password, the door lock can verify the received room unlock password according to the pre-stored room unlock password; if the verification is successful, the room door will be opened; if the verification fails, the room door will not be opened.

The unlocking processes of the hotel's daily maintenance personnel and hotel management personnel with their corresponding level of room unlock password are similar to the user's unlocking process. That is, the door lock can be opened by inputting the room unlock password on the password input panel of the lock or by remotely unlocking with APP for door lock control installed on the terminal of the hotel's daily maintenance personnel and the terminal of the hotel management personnel. The specific unlocking processes are the same, except that the room unlock passwords are different, so it will not be repeated here.

The example of the present disclosure associates order information with door lock control to achieve network-based control for a room door lock, greatly reducing the manual intervention in the door lock control process, and improving the efficiency of the door lock control. In addition, the disclosed example provides manners for inputting the unlock password and remotely unlocking. The user can flexibly select an unlocking manner according to his own needs, thereby improving the flexibility of the door lock control and improving the user experience. In addition, the lock is opened with the room unlock password to greatly reduce the possibility of losing the room unlock password and improve the security of the door lock control.

In the present disclosure, reservation request information may be received, and corresponding order information may be generated according to the reservation request information; a room unlock password corresponding to the order information may be generated; a correspondence between a room identifier corresponding to the order information and the room unlock password may be stored; and the room unlock password may be sent to the door lock corresponding to the room identifier. In the present disclosure, the network-based control for the door lock is realized by generating a room unlock password according to a user's reservation order information, and storing a correspondence between the room identifier and the room unlock password, so that an user who is only notified of the room unlock password can unlock the door with the room unlock password, thereby reducing manual intervention during the door lock control process and improving the efficiency of the door lock control. In addition, the room unlock password does not require a physical carrier, which reduces the possibility of losing the room unlock password and improves the security of the door lock control.

### Example 2

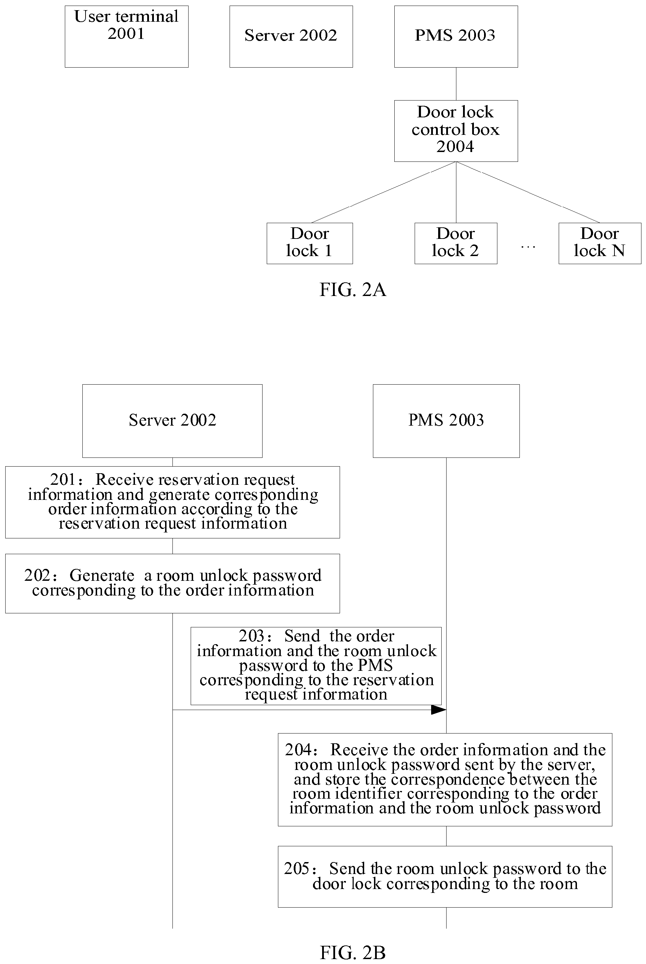

The present disclosure provides a network-based control method for a door lock. In this method, the network-based control for the door lock can be achieved by setting up a server and a PMS (Property Management System). As shown in FIG. 2A, the network architecture according to the method comprises a user's terminal 2001, a server 2002, and a PMS 2003, a door lock control box 2004 and a door lock. The user's terminal may be user's mobile phone, PC, or PAD, etc. The server may be a server of a group-purchasing website or a hotel's web server, etc. The door lock control box is a relay network element for performing network communication between the PMS and the door lock. One lock control box can perform network communication with one or more door locks. FIG. 2A schematically depicts a door lock control box and a plurality of door locks, door lock 1, door lock 2,..., Door lock N, corresponding to the door lock control box. When the user reserves a room in the server by the user's terminal, the method provided in the present disclosure can achieve the network-based control for door lock, thereby improving the efficiency and safety of controlling the room door lock.

Referring to FIG. 2B, the method specifically comprises the following blocks:

Block 201: a server may receive reservation request information and generate corresponding order information according to the reservation request information.

The reservation request information may comprise user's personal information, hotel information, and user's reservation requirement information. The user's personal information may comprise the user's name, contact information, ID number, and the like. The hotel information comprises a name of hotel which the user wants to reserve. The user's reservation requirement information comprises information such as a type of room which the user needs to reserve and a length of stay. The type of room may comprise a single room, a deluxe suite or a standard room and so on. The length of stay can comprise a user's check-in time and check-out time.

The user can log in the server and send the reservation request information to the server by the user terminal. When the server receives the reservation request information sent by the user terminal, it may generate the order information for the user according to the reservation request information.

When the server generates the order information for the user, it may allocate a room meeting the user's reservation needs to the user according to the reservation requirement information included in the reservation request information. In the example of the present disclosure, the server may not directly allocate a room to the user. The server may send the reservation requirement information included in the reservation request information through the network to the PMS of the hotel which the user needs to reserve. The PMS of the hotel may allocate a room to the user according to the reservation requirement information and then return the room identifier corresponding to the allocated room to the server. The room identifier can be the room number of a room.

The generated order information comprises order number, user information, hotel information, and room information. The user information may be personal information of the user included in the reservation request information, the hotel information may be a name and address of the hotel that the user want to reserve, and the room information comprises a room identifier corresponding to the room allocated to the user and a length of stay.

In the present disclosure, besides reserving a hotel room through a server, the user may also directly log in the hotel's PMS to reserve a room. The user terminal may send the reservation request information to the hotel's PMS, and the PMS receives the reservation request information, allocates a room to the user according to the reservation request information and generates the order information corresponding to the reservation request information. After generating the order information, the PMS may also store the order information and send the order information to the server, so that the server generates a corresponding room unlock password according to the order information.

Block 202: the server may generate a room unlock password corresponding to the order information.

In the present disclosure, the server is provided with a password generation rule in advance. The password generation rule may specify the number of digits of a room unlock password to be generated and password generation algorithm to be used.

In addition, in the daily management of the hotel, daily maintenance personnel such as cleaning personnel need to open the room when cleaning the room and managing room safety. Hotel management personnel such as a hotel manager sometimes need to open the room during the hotel management process. It is required to generate a room unlock password not only for a user, but also for hotel maintenance personnel such as cleaning personnel and hotel management personnel such as a hotel manager. In the present disclosure, the server may be provided with a preset password level in advance. The password level comprises a user level, a cleaning level, and a management level. The user can use a user-level room unlock password to open the room, and the hotel daily maintenance personnel such as cleaning personnel can use a cleaning-level room unlock password to open the room. The hotel manager can use a management-level room unlock password to open the room.

When generating a room unlock password, according to the preset password generation rule and the preset password level, the server may generate the room unlock password corresponding to the order information. A random password generation algorithm may be used when generating the room unlock password.

In addition to the above-described method for generating a room unlock password, the server may also generate a room unlock password based on the content included in the generated order information. Specifically, the room unlock password corresponding to the order information may be generated according to the preset password generation rule, the preset password level, and the order information.

When the preset password level is the user level, the server may generate a room unlock password corresponding to the user according to the preset password generation rule, the user level included in the preset password level, and the user information and the room information included in the order information.

When the preset password level is the cleaning level, the server may generate a room unlock password corresponding to the cleaning personnel according to the preset password generation rule, the cleaning level included in the preset password level, and the room information included in the order information.

When the preset password level is the management level, the server may generate a room unlock password corresponding to the hotel manager according to the preset password generation rule, the management level included in the preset password level, and the hotel information and the room information included in the order information.

After the server generates the room unlock password at each of the levels through the above method, it may store the correspondence between the order information and the room unlock password. Further, when the server stores the correspondence between the order information and the room unlock password, it may distinguish from the room unlock passwords at each of the levels corresponding to the stored order information.

In an example of the present disclosure, the server may also send the order information and the user-level room unlock password to a user terminal so that the user terminal can store the room unlock password. Similarly, the server may also send the management-level room unlock password corresponding to the order information to a terminal of hotel management personnel such as a hotel manager, and the cleaning-level room unlock password to a terminal of hotel daily maintenance personnel such as a cleaning personnel.

In the present disclosure, when generating the room unlock password corresponding to the order information, the server may also generate a valid period for the room unlock password according to the reservation request information. The length of stay included in the reservation request information may be determined as the valid period for the room unlock password. That is, the valid period may be from a check-in time to a check-out time of a user. When the correspondence between the order information and the room unlock password is stored, the valid period for the room unlock password may be also stored.

After generating the order information and the room unlock password through the above blocks 201 and 202, the server may synchronize the order information and the corresponding room unlock password into the PMS of the hotel through the following block 203.

Block 203: the server may send the order information and the room unlock password to the PMS corresponding to the reservation request information.

In the disclosed example, the server and the hotel's PMS can communicate through the Internet. The server can send the order information and the corresponding room unlock password to the hotel's PMS through a network connected with the hotel's PMS. The server can also send the valid period for the room unlock password to the hotel's PMS. In addition, the server can also send the valid period for the room unlock password to the PMS.

Block 204: the PMS may receive the order information and the room unlock password sent by the server, and stores the correspondence between the room identifier corresponding to the order information and the room unlock password.

When the PMS of the hotel receives the order information, the room unlock password and the valid period for the room unlock password sent by the server, it may store the correspondence between the room identifier corresponding to the order information and the room unlock password at each of the levels. In addition, the PMS can also store the valid period corresponding to the room unlock password.

Subsequently, when the user arrives at the hotel to check in, the user can present the ID card or the order information to the hotel service personnel. The hotel service personnel can obtain the room identifier corresponding to the room reserved by the user from the correspondence between the order information and the room identifier stored in the PMS based on the ID card or the order information presented by the user, retrieve the room unlock password corresponding to the user level from the correspondence between the room identifier and the room unlock password stored in the PMS according to the room identifier, and inform the user of the room unlock password.

In addition, in the example of the present disclosure, the following solution is also possible. Specifically, the user is not informed of the room unlock password by the hotel service personnel at the check-in time. Instead, when the server generates the user-level room unlock password at block 102, the server sends the user-level room unlock password to the user's terminal via the network.

Block 205: the PMS may send the room unlock password to the door lock corresponding to the room.

In the example of the disclosure, the door lock control box may be in network communication with one or more door locks. The door lock control box stores room identifiers corresponding to the door locks with which the door lock control box can perform network communication. For each door lock control box, the PMS of the hotel also stores identifier of the door lock control box and the room identifier corresponding to the door lock with which the door lock control box can perform network communication.

After storing the correspondence between the room identifier corresponding to the order information and the room unlock password, the PMS of the hotel may determine the door lock control box which performs network communication with the door lock corresponding to the room identifier according to the room identifier, and send the room identifier, the room unlock password corresponding to the room identifier and the valid period for the room unlock password to the determined door lock control box. After receiving the room identifier, the room unlock password and the valid period, the door lock control box may send the room unlock password and the valid period to the door lock corresponding to the room identifier. After receiving the room unlock password and the valid period sent by the door lock control box, the door lock may store the room unlock password and the valid period.

In the example of the present disclosure, for the user-level, the cleaning-level, and the management-level room unlock passwords, the PMS of the hotel sends the room unlock password at each of the levels to the door lock through the above manner, and the door lock stores the received room unlock password at each of the levels.

Through the above blocks 201-205, the user's order information can be associated with the door lock control of the room, and the room unlock passwords at each of the levels corresponding to the order information can be generated. Subsequently, the user, the hotel daily maintenance personnel, and the hotel manager can open the room with the room unlock password at the corresponding level.

In the example of the present disclosure, the manner for opening the room based on the room unlock password is related to the manner in which the user knows the user-level room unlock password. The manner in which the hotel's daily maintenance personnel open the room based on the cleaning-level room unlock password and the manner in which the hotel manager opens the room based on the management-level room opening password are similar to the manner in which the user opens the room. Below, take the process that the user opens the room based on the user-level room unlock password as an example for detailed description.

When the user is informed of the user-level room unlock password by the hotel management personnel at the check-in time, the unlocking process for the user is as follows: the user arrives at his/her room a door lock of which is equipped with a password input panel, and inputs the user-level room unlock password on the password input panel, and the door lock acquires the user-entered room unlock password from the password input panel, and verifies whether the user-level room unlock password stored therein is the same with the room unlock password input by the user. If they are the same, the door lock verifies whether the current time is within the valid period of the room unlock password. If the current time is within the valid period of the room unlock password, the door lock will be automatically opened to allow the user to enter the room. If not, the door lock will not be opened and the door lock reminds via voice the user that the room is not available for the user at present. If the user-level room unlock password stored therein is different from the room unlock password input by the user, the verification fails and the door lock is not opened and the door lock reminds the user that the password is wrong, and the user can try inputting the room unlock password again or ask the hotel service personnel about the correct room unlock password.

In an example of the disclosure, an APP (Application) for the door lock control is installed in the user's terminal. The APP provides the user with an unlocking trigger button, and the user can remotely open the lock through the unlocking trigger button.

When the user receives the user-level room unlock password sent from the server through the user terminal at the time of reserving a room on the Internet, the user can remotely open the lock through the user terminal. The specific process of remote unlocking comprises:

The user may select the room information corresponding to the room to be unlocked in the unlocking interface displayed by the APP, where the room information comprises the room identifier corresponding to the room, and then, clicks the unlocking trigger button. When detecting that the user clicks the unlocking trigger button, the user terminal acquires the room information selected by the user and the room unlock password corresponding to the room information, and sends the room information and the room unlock password to the server. The server can receive the room information and the room unlock password sent from the user terminal and forwards the room unlock password to the door lock corresponding to the room information through the corresponding door lock control box, based on the room information. After receiving the room unlock password, the door lock can verify the received room unlock password according to the pre-stored room unlock password; if the verification is successful, the room door will be opened; if the verification fails, the room door will not be opened.

The unlocking process of the hotel's daily maintenance personnel and hotel management personnel with their corresponding-level room unlock password is similar to the user's unlocking process, i.e., the door lock can be opened by inputting the room unlock password on the password input panel of the door lock or by remotely unlocking with APP for door lock control installed on the terminal of the hotel's daily maintenance personnel and the terminal of the hotel management personnel. The specific unlocking processes are the same, except that the room unlock passwords are different, so it will not be repeated here.

The example of the disclosure associates order information with door lock control to achieve network-based control for a room door lock, greatly reducing the manual intervention in the door lock control process, and improving the efficiency of the door lock control. In addition, the disclosed example provides manners for inputting the unlock password and remotely unlocking. The user can flexibly select an unlocking manner according to his own needs, thereby improving the flexibility of the door lock control and improving the user experience. In addition, the lock is unlocked with the room unlock password to greatly reduce the possibility of losing the room unlock password and improve the security of the door lock control.

In the example of the disclosure, the server may receive reservation request information, and generate corresponding order information according to the reservation request information; generate a room unlock password corresponding to the order information; send the order information and the room unlock password to the PMS corresponding to the reservation request information. The PMS may store a correspondence between a room identifier corresponding to the order information and the room unlock password; and send the room unlock password to the door lock corresponding to the room identifier. In the present disclosure, the server may generate a room unlock password according to a user's reservation order information, and the PMS may store a correspondence between a room identifier and a room unlock password, so as to realize network-based control for a door lock. A user who is only notified of the room unlock password can unlock the door with the room unlock password, thereby reducing manual intervention during the door lock control process and improving the efficiency of the door lock control. In addition, a room unlock password does not require a physical carrier, which reduces the possibility of losing the room unlock password and improves the security of door lock control.

### Example 3

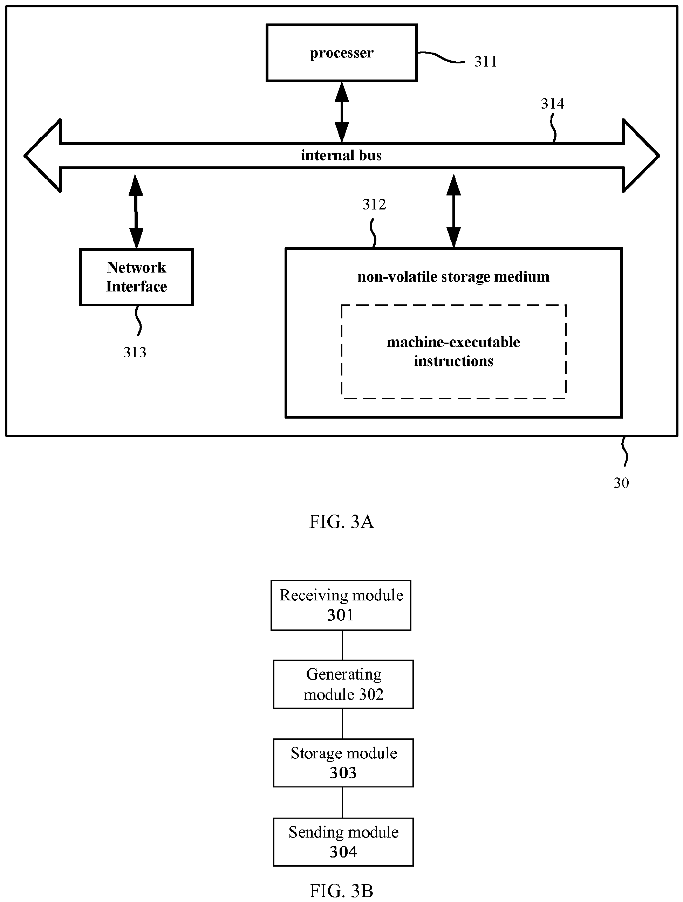

Referring to FIG. 3A, the present disclosure provides a network-based control apparatus 30 for a door lock, the apparatus is applicable to perform the network-based control method for the door lock provided in Example 1. The apparatus comprises a processor 311, a non-volatile storage medium 312, a network interface 313, and an internal bus 314, wherein the processor 311, the non-volatile storage medium 312, and the network interface 313 can communicate via the internal bus 314. The processor 311 can implement a network-based control method for a door lock described in Example 1 by reading and executing the machine-executable instructions stored on the non-volatile storage medium 312. FIG. 3B is a schematic diagram of the logical structure of the network-based control apparatus 30 for the door lock. The function of the network-based control apparatus 30 for the door lock can be logically implemented by the following modules:
a receiving module 301, configured to receive reservation request information, and to generate corresponding order information according to the reservation request information;
a generating module 302, configured to generate a room unlock password corresponding to the order information;
a storage module 303, configured to store a correspondence between a room identifier corresponding to the order information and the room unlock password; and
a sending module 304, configured to send the room unlock password to a door lock corresponding to the room identifier.

The generating module 302 may generate a room unlock password corresponding to each level by a first generating unit or a second generating unit.

The first generating unit is configured to generate the room unlock password corresponding to the order information according to a preset password generation rule and a preset password level; or
the second generating unit is configured to generate the room unlock password corresponding to the order information according to the preset password generation rule, the preset password level, and the order information.

In the disclosed example, the preset password level comprises a user level, a cleaning level, and a management level and the order information comprises user information, hotel information, and room information, wherein
the above-mentioned second generating unit comprises:
a first generating subunit, configured to generate a room unlock password corresponding to an user according to the preset password generation rule, a user level included in the preset password level, and the user information and the room information included in the order information;
a second generating subunit, configured to generate a room unlock password corresponding to a cleaning personnel according to the preset password generation rule, the cleaning level included in the preset password level, and the room information included in the order information;
a third generating subunit, configured to generate a room unlock password corresponding to a hotel manager according to the preset password generation rule, the management level included in the preset password level, and the hotel information and room information included in the order information.

In the present disclosure, after the generating module 302 generates the room unlock password, a valid period generating module also generates the valid period for the room unlock password. The valid period generating module is configured to generate the valid period for the room unlock password according to the reservation request information, and to send the valid period to the door lock corresponding to the room identifier so that the door lock stores the valid period for the room unlock password.

In the present disclosure, after the apparatus generates the room unlock password corresponding to the order information by the generation module 302, the sending module 304 is also configured to send the room unlock password to the user terminal, so that the user terminal stores the room unlock password.

Alternatively, the apparatus retrieves the room unlock password by a retrieving module and displays the room unlock password to the user. The retrieving module is configured to obtain the room unlock password from the stored correspondence between the room identifier and the room unlock password and to display the room unlock password according to the room identifier corresponding to the order information when the user arrives at the hotel to check in.

**In** the example of the present disclosure, the receiving module 301 is further configured to receive unlock information sent by the user terminal, the unlock information comprising the room unlock password and the room information;
the sending module 304 is further configured to send the room unlock password to the door lock corresponding to the room information, so that the door lock verifies the room unlock password.

In the present disclosure, reservation request information is received, and corresponding order information is generated according to the reservation request information; a room unlock password corresponding to the order information is generated; a correspondence between the room identifier corresponding to the order information and the room unlock password is stored; and the room unlock password is sent to a door lock corresponding to the room. In the present disclosure, the room unlock password is generated according to the user's order information, and a correspondence between a room identifier and the room unlock password is stored, so as to achieve network-based control for a door lock. Once notified of a room unlock password, a user can unlock the door with the room unlock password, thereby reducing manual intervention during the door lock control process and improving the efficiency of the door lock control. In addition, the room unlock password does not require a physical carrier, which reduces the possibility of losing the room unlock password and improves the security of the door lock control.

### Example 4

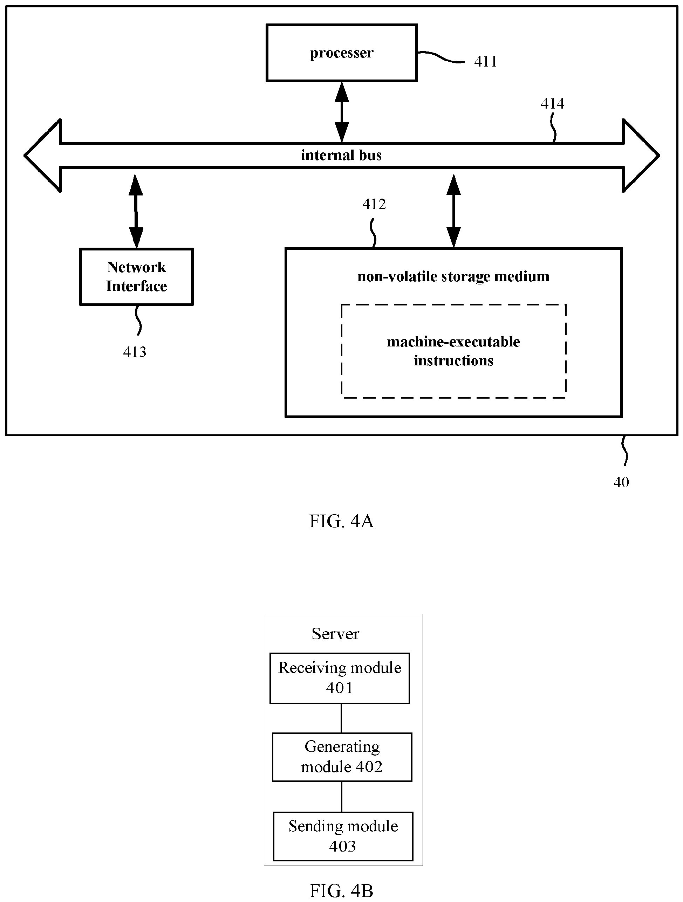

Referring to FIG. 4A, the present disclosure provides a server 40 for executing the network-based control method for the door lock provided in Example 2. The server comprises a processor 411, a non-volatile storage medium 412, a network interface 413, and an internal bus 414, wherein the processor 411, the non-volatile storage medium 412, and the network interface 413 can communicate via the internal bus 414. The processor 411 can implement a network-based control method for a door lock described in Example 2 by reading and executing the machine-executable instructions stored on the non-volatile storage medium 412. FIG. 4B is a schematic diagram of a logical structure of the server 40. The functions of the server 40 can be logically implemented by the following modules:
a receiving module 401, configured to receive reservation request information, and to generate corresponding order information according to the reservation request information;
a generating module 402, configured to generate a room unlock password corresponding to the order information;
a sending module 403, configured to send the order information and the room unlock password to a hotel management system (PMS) corresponding to the reservation request information, so that the PMS controls the door lock corresponds to the order information according to the room unlock password.

The generating module 402 comprises:
a first generating unit, configured to generate the room unlock password corresponding to the order information according to the preset password generation rule and the preset password level; or
a second generating unit, configured to generate the room unlock password corresponding to the order information according to the preset password generation rule, the preset password level, and the order information.

In the present disclosure, the preset password level comprises a user level, a cleaning level, and a management level ,and the order information comprises user information, hotel information, and room information, wherein the second generating unit comprises:
a first generating subunit, configured to generate a room unlock password corresponding to the user according to the preset password generation rule, the user level included in the preset password level, and the user information and the room information included in the order information;
a second generating subunit, configured to generate a room unlock password corresponding to a cleaning personnel according to the preset password generation rule, the cleaning level included in the preset password level, and the room information included in the order information;
a third generating subunit, configured to generate a room unlock password corresponding to a hotel manager according to the preset password generation rule, the management level included in the preset password level, and the hotel information and the room information included in the order information.

The server also comprises a valid period generating module for generating a valid period for the room unlock password according to the reservation request information; wherein
the sending module 403 is further configured to send the valid period to the PMS, so that the PMS may send the valid period to the door lock corresponding to the order information.

After the room unlock password is generated, the sending module 403 is further configured to send the room unlock password to the user terminal, so that the user terminal stores the room unlock password.

In the present disclosure, when the user unlocks the door lock with the room unlock password, the server further comprises: a receiving module configured to receive unlock information sent by a user terminal, the unlock information comprising the room unlock password and the room information;

**the** sending module 403 is further configured to send the unlock information to the PMS, so that the PMS controls the door lock corresponding to the room information to verify the room unlock password.

In the present disclosure, the server receives reservation request information, and generates corresponding order information according to the reservation request information; generates a room unlock password corresponding to the order information; and sends the order information and the room unlock password to the PMS corresponding to the reservation request information so that the PMS may control the door lock corresponding to the order information with the room unlock password. In the present disclosure, the server generates the room unlock password according to the user's order information, and the PMS realizes network-based control for the door lock with the room unlock password, and once the user is notified of the room unlock password, the user can unlock the corresponding room with the room unlock password, thereby reducing manual intervention during the door lock control process and improving the efficiency of the door lock control. In addition, the room unlock password does not require a physical carrier, which reduces the possibility of losing the room unlock password and improves the security of the door lock control.

### Example 5

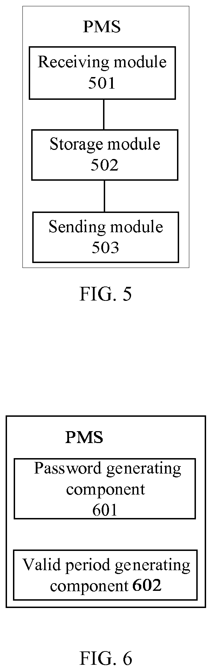

Referring to FIG. 5, the present disclosure provides a hotel management system PMS for performing the network-based control method for a door lock provided in Example 2. The PMS specifically comprises:
a receiving module 501, configured to receive the order information and the room unlock password sent by the server;
a storage module 502, configured to store a correspondence between the room identifier corresponding to the order information and the room unlock password; and
a sending module 503, configured to send the room unlock password to the door lock corresponding to the room identifier.

When the user unlocks the door lock with the room unlock password, the receiving module 501 is also configured to receive unlock information sent by the server. The unlock information comprises a room unlock password and the room information.

The sending module 503 is further configured to send the room unlock password to the door lock corresponding to the room information, so that the door lock verifies the room unlock password.

In the present disclosure, the PMS may also provide the room unlock password to the user by a retrieving module.

The retrieving module is configured to, when the user arrives at the hotel to check in, retrieve the room unlock password from the stored correspondence between the room identifier and the room unlock password according to the room identifier corresponding to the order information, and to display the room unlock password.

In the present disclosure, the receiving module 501 is further configured to receive a valid period for the room unlock password sent by the server, and
the sending module 503 is further configured to send the valid period to the door lock corresponding to the room identifier so that the door lock stores the valid period.

In the present disclosure, the PMS receives the order information and the room unlock password sent by the server, stores the correspondence between the room identifier corresponding to the order information and the room unlock password, and sends the room unlock password to the door lock corresponding to the room identifier. In the present disclosure, the server generates the room unlock password according to the user's order information, and the PMS stores a correspondence between the room identifier and the room unlock password so as to realize network control for the door lock, so that once the user is notified of the room unlock password, the user can unlock the corresponding room with the room unlock password, thereby reducing manual intervention during the door lock control process and improving the efficiency of the door lock control. In addition, the room unlock password does not require a physical carrier, which reduces the possibility of losing the room unlock password and improves the security of the door lock control.

### Example 6

Referring to FIG. 6, the present disclosure provides a hotel management system PMS for performing the network-based control method for a door lock provided in Example 1.

The PMS is configured to receive reservation request information, generate corresponding order information according to the reservation request information, generate a room unlock password corresponding to the order information, store a correspondence between the room identifier corresponding to the order information and the room unlock password, and send the room unlock password to the door lock corresponding to the room identifier.

As shown in Figure 6, the PMS comprises:
a password generating component 601 configured to generate a room unlock password corresponding to the order information according to a preset password generation rule and a preset password level, or to generate a room unlock password corresponding to the order information according to a preset password generation rule, a preset password level, and order information.

The preset password level comprises a user level, a cleaning level, and a management level and the order information comprises user information, hotel information, and room information;
the password generating component 601 is configured to generate a room unlock password corresponding to the user according to the preset password generation rule, the user level included in the preset password level, and the user information and room information included in the order information; to generate a room unlock password corresponding to a cleaning personnel according to the preset password generation rule, the cleaning level included in the preset password level and the room information included in the order information; and to generate a room unlock password corresponding to a hotel manager according to the preset password generation rule, management level included in the preset password level, and hotel information and room information included in the order information.

As shown in FIG. 6 , the PMS further comprises a valid period generating component 602 configured to generate the valid period for the room unlock password according to the reservation request information, and to send the valid period to the door lock corresponding to the room identifier so that the door lock stores the valid period for the room unlock password.

The PMS is also configured to send the room unlock password to the user terminal, so that the user terminal stores the room unlock password; or, when the user arrives at the hotel to check in, to retrieve the room unlock password from the stored correspondence between the room identifier and the room unlock password according to the room identifier corresponding to the order information and to display the room unlock password.

The PMS is also configured to receive unlock information comprising the room unlock password and room information sent by the user terminal, and to send the room unlock password to the door lock corresponding to the room information, so that the door lock verifies the room unlock password.

In the present disclosure, reservation request information is received, and corresponding order information is generated according to the reservation request information; a room unlock password corresponding to the order information is generated; a correspondence between a room identifier corresponding to the order information and the room unlock password is stored; and the room unlock password is sent to the door lock corresponding to the room. In the present disclosure, the network-based control for the door lock is realized by generating a room unlock password according to a user's reservation order information, and storing correspondence between the room identifier and the room unlock password, so that once the user is notified of the room unlock password, the user can unlock the corresponding room with the room unlock password, thereby reducing manual intervention during the door lock control process and improving the efficiency of the door lock control. In addition, the room unlock password does not require a physical carrier, which reduces the possibility of losing the room unlock password and improves the security of the door lock control.

The network-based control apparatus and the network-based controller for the door lock provided in the examples of the present disclosure may be specific hardware on the apparatus or software or firmware installed on the apparatus. Persons skilled in the art can clearly understand that, for convenience and brevity of description, specific working processes of the aforementioned systems, apparatuses and units may refer to the corresponding processes in the above method.

In the several examples provided in this application, it should be understood that the disclosed apparatus and methods may be implemented in other ways. The apparatus are only schematic, for example, the division of the units is only one logical function division, and actual implementation may have another division manner. For example, multiple units or components may be combined or may be integrated into another system, or some features can be ignored or not implemented. In addition, the displayed or discussed mutual coupling or direct coupling or communication connection may be through some communication interfaces, and indirect coupling or communication connection of the apparatus or units may be electrical, mechanical or other forms.

The units described as separate parts may or may not be physically separated, and the parts displayed as units may or may not be physical units, that is, may be located in one place, or may be distributed on multiple network units. According to actual needs, some or all of the units may be selected to achieve the purpose of this exemplary scheme.

In addition, each functional unit in each of examples of the present disclosure may be integrated into one processing unit, or each of units may exist alone physically, or two or more units may be integrated into one unit.

The functions, if implemented in the form of software functional units and sold or used as a stand-alone product, may be stored in a computer-readable storage medium. Based on such understanding, the part of the technical solutions of the disclosure or the part of the technical solutions of the disclosure that contributes to the prior art may be embodied in the form of a software product stored in a storage medium, including several instructions used to cause a computer apparatus (which may be a personal computer, a server, or a network apparatus, etc.) to perform all or part of the steps of the methods described in the various examples of the present disclosure. The foregoing storage medium comprises: a U disk, a removable hard disk, a read-only memory (ROM), a random access memory (RAM), a magnetic disk, an optical disk, or any other medium that can store program codes..

The foregoing descriptions are merely specific embodiment s of the present disclosure and are not intended to limit the protection scope of the present disclosure. Modification or replacement which can be easily envisaged by persons skilled in the art without departing from the scope of the invention should be within the scope of the disclosure. Therefore, the protection scope of the disclosure should be based on the protection scope of the claims.

## Claims

1. A network-based control method for a door lock, comprising:
receiving reservation request information and generating corresponding order information based on the reservation request information;
generating a room unlock password corresponding to the order information;
storing a correspondence between a room identifier corresponding to the order information and the room unlock password; and
sending the room unlock password to a door lock corresponding to the room identifier.

2. The method of claim 1, wherein generating the room unlock password corresponding to the order information comprises:
generating the room unlock password corresponding to the order information based on a preset password generation rule and a preset password level; or
generating the room unlock password corresponding to the order information based on the preset password generation rule, the preset password level, and the order information.

3. The method of claim 2, wherein the preset password level comprises a user level, a cleaning level, and a management level, and the order information comprises user information, hotel information, and room information;
generating the room unlock password corresponding to the order information based on the preset password generation rule, the preset password level, and the order information comprises:
generating a room unlock password corresponding to an user based on the preset password generation rule, the user level included in the preset password level, and the user information and the room information included in the order information;
generating a room unlock password corresponding to a cleaning personnel based on the preset password generation rule, the cleaning level included in the preset password level, and the room information included in the order information; and
generating a room unlock password corresponding to a hotel manager based on the preset password generation rule, the management level included in the preset password level, and the hotel information and the room information included in the order information.

4. The method according to any one of claims 1 to 3, wherein the method further comprises:
generating a valid period for the room unlock password based on the reservation request information; and
sending the valid period to the door lock corresponding to the room identifier, so that the door lock stores the valid period for the room unlock password.

5. The method of claim 1, wherein the method further comprises:
after the room unlock password corresponding to the order information is generated,
sending the room unlock password to a user terminal, so that the user terminal stores the room unlock password; or
when an user arrives at a hotel to check in, retrieving the room unlock password from the stored correspondence between the room identifier and the room unlock password based on the room identifier corresponding to the order information, and displaying the room unlock password.

6. The method of claim 1, wherein the method further comprises:
receiving unlock information sent by a user terminal, the unlock information comprising a room unlock password and room information; and
sending the room unlock password to the door lock corresponding to the room information, so that the door lock verifies the room unlock password.

7. Anon-volatile storage medium storing machine-executable instructions executable by one or more processors, wherein the machine-executable instructions are executed by the one or more processors to implement the steps of the method of any one of claims 1 to 6.

8. A network-based control apparatus for a door lock, comprising:
a receiving module configured to receive reservation request information and generate corresponding order information based on the reservation request information;
a generating module configured to generate a room unlock password corresponding to the order information;
a storage module configured to store a correspondence between a room identifier corresponding to the order information and the room unlock password; and
a sending module configured to send the room unlock password to a door lock corresponding to the room identifier.

9. The apparatus of claim 8, wherein the generating module comprises:
a first generating unit configured to generate the room unlock password corresponding to the order information based on a preset password generation rule and a preset password level; or
a second generating unit configured to generate the room unlock password corresponding to the order information based on the preset password generation rule, the preset password level, and the order information.

10. The apparatus of claim 9, wherein the preset password level comprises a user level, a cleaning level, and a management level, and the order information comprises user information, hotel information, and room information;
the second generating unit comprises:
a first generating subunit configured to generate a room unlock password corresponding to an user based on the preset password generation rule, the user level included in the preset password level, and the user information and the room information included in the order information;
a second generating subunit configured to generate a room unlock password corresponding to a cleaning personnel based on the preset password generation rule, the cleaning level included in the preset password level, and the room information included in the order information;
a third generating subunit configured to generate a room unlock password corresponding to a hotel manager based on the preset password generation rule, the management level included in the preset password level, and the hotel information and room information included in the order information.

11. The apparatus according to any one of claims 8-10, wherein the apparatus further comprises:
a valid period generating module configured to generate a valid period for the room unlock password based on the reservation request information; and to send the valid period to the door lock corresponding to the room identifier, so that the door lock stores the valid period for the room unlock password.

12. The apparatus of claim 8, wherein the sending module is further configured to send the room unlock password to a user terminal, so that the user terminal stores the room unlock password; or
the apparatus further comprises:
a retrieving module configured to, when an user arrives at a hotel to check in, retrieve the room unlock password from the stored correspondence between the room identifier and the room unlock password based on the room identifier corresponding to the order information, and to display the room unlock password.

13. The apparatus of claim 8, wherein
the receiving module is further configured to receive unlock information sent by a user terminal, the unlock information comprising a room unlock password and room information; and
the sending module is further configured to send the room unlock password to the door lock corresponding to the room information, so that the door lock verifies the room unlock password.

14. A server, comprising:
a receiving module configured to receive reservation request information and generate corresponding order information based on the reservation request information;
a generating module configured to generate a room unlock password corresponding to the order information;
a sending module configured to send the order information and the room unlock password to a hotel management system (PMS) corresponding to the reservation request information, so that the PMS controls a door lock corresponding to the order information based on the room unlock password.

15. The server of claim 14, wherein the generating module comprises:
a first generating unit configured to generate the room unlock password corresponding to the order information based on a preset password generation rule and a preset password level; or
a second generating unit configured to generate the room unlock password corresponding to the order information based on the preset password generation rule, the preset password level, and the order information.

16. The server of claim 15, wherein the preset password level comprises a user level, a cleaning level, and a management level, and the order information comprises user information, hotel information, and room information; and
the second generating unit comprises:
a first generating subunit configured to generate a room unlock password corresponding to an user based on the preset password generation rule, the user level included in the preset password level, and the user information and the room information included in the order information;
a second generating subunit configured to generate a room unlock password corresponding to a cleaning personnel based on the preset password generation rule, the cleaning level included in the preset password level, and the room information included in the order information;
a third generating subunit configured to generate a room unlock password corresponding to a hotel manager based on the preset password generation rule, the management level included in the preset password level, and the hotel information and the room information included in the order information.

17. The server of claims 14-16, wherein the server further comprises:
a valid period generating module configured to generate a valid period for the room unlock password based on the reservation request information;
wherein the sending module is further configured to send the valid period to the PMS, so that the PMS sends the valid period to the door lock corresponding to the order information.

18. The server of claim 14, wherein
the sending module is further configured to send the room unlock password to a user terminal, so that the user terminal stores the room unlock password.

19. The server of claim 14, wherein the server further comprises:
a receiving module configured to receive unlock information sent by a user terminal, the unlock information comprising a room unlock password and room information;
wherein the sending module is further configured to send the unlock information to the PMS, so that the PMS controls the door lock corresponding to the room information to verify the room unlock password.

20. A hotel management system (PMS), comprising:
a receiving module configured to receive order information and room unlock password sent by a server;
a storage module configured to store a correspondence between a room identifier corresponding to the order information and the room unlock password; and
a sending module configured to send the room unlock password to a door lock corresponding to the room identifier.

21. The PMS of claim 20, wherein
the receiving module is further configured to receive unlock information sent by the server, the unlock information comprising the room unlock password and room information;
the sending module is further configured to send the room unlock password to a door lock corresponding to the room information so that the door lock verifies the room unlock password.

22. The PMS of claim 20, wherein the PMS further comprises:
a retrieving module configured to, when an user arrives at a hotel to check in, retrieve a room unlock password from the stored correspondence between the room identifier and the room unlock password based on the room identifier corresponding to the order information, and to display the room unlock password.

23. The PMS of claim 20, wherein
the receiving module is further configured to receive a valid period for the room unlock password sent by the server; and
the sending module is further configured to send the valid period to a door lock corresponding to the room identifier so that the door lock stores the valid period.
